# EUROPÄISCHE PATENTANMELDUNG

(11) **EP 1 780 183 A2**
(43) Veröffentlichungstag der Anmeldung: **02.05.2007**
(21) Anmeldenummer: 07000770.3
(22) Anmeldetag: 16.07.2004
(51) Int. Cl.: C04B 22/14, C04B 28/02, C01B 17/90, C01G 23/053, C01G 49/14

(54) **Reduktionsmittel für den löslichen Chromatgehalt in Zement und Verfahren für seine Herstellung**

(30) Priorität: 17.07.2003 DE 10332530
(62) Teilanmeldung aus: 04741082.4
(71) Anmelder: Tronox Pigments International GmbH, 8001 Zürich (CH)
(72) Erfinder: Vössing, Michael, 44866 Bochum (DE); Auer, Gerhard, 47800 Krefeld (DE); Laubach, Benno, 47809 Krefeld (DE); Klein, Detlef, 47829 Krefeld (DE); Schuy, Werner, 47918 Tönisvorst (DE); Köllisch, Klaus, 47809 Krefeld (DE); Weiss, Erwin, 65830 Kriftel (DE); Bahl, Werner, 45657 Recklinghausen (DE); Reese, Philip, Nelson (NZ)
(74) Vertreter: HOFFMANN EITLE

(57) **Zusammenfassung**

Die Erfindung betrifft ein eisen(II)sulfathaltiges Reduktionsmittel, umfassend eine eisen(II)sulfathaltige Ausfällung, wobei die eisen(II)sulfathaltige Ausfällung Eisen(II)sulfat-Monohydrat enthält und erhältlich ist durch ein Verfahren, umfassend die Aufkonzentrierung einer eisen (II) sulfathaltigen Gebrauchtschwefelsäure mit einem Gehalt an Titan von weniger als 1,5 Gew.% und die Abtrennung der Schwefelsäure vor der erhaltenen Ausfällung.

## Beschreibung

Die Erfindung betrifft ein Reduktionsmittel für den löslichen Chromatgehalt in Zement und Verfahren für seine Herstellung.

Der Chromgehalt von Zementen liegt je nach verwendeter Rohstoffbasis üblicherweise zwischen 20 ppm und 100 ppm. Das im Zement enthaltene Chrom kann beim Mischen mit Wasser als Chrom(VI) in Lösung gehen und bei häufigem Kontakt die Haut sensibilisieren und eine Chromallergie, die sogenannte Maurerkrätze, auslösen. Zum Schutz gegen die Chromallergie kommt in Betracht, das Chrom(VI) zum Chrom(III) chemisch zu reduzieren und damit die Löslichkeit drastisch zu reduzieren. Als Reduktionsmittel wird in der Zementindustrie hauptsächlich Eisen(II)sulfat (als Heptahydrat oder als Monohydrat) eingesetzt, um einen Chrom(VI)-Gehalt von kleiner als 2 ppm zu erreichen (vgl. Locher, Friedrich Wilhelm: Zement: Grundlagen der Herstellung und Verwendung, Verlag Bau + Technik GmbH, Düsseldorf 2000).

Eine Übersicht findet sich bei W. Manns, C. Laskowski: Beton 2/1999, 78-85.

In EP 54314, 160746 und 160747 A1 wird die Zugabe von Eisensulfat zum gemahlenen Zement beschrieben, wobei das Eisensulfat in trockener Form vor dem Zementlagersilo zugegeben wird. Gemäß EP 160 747 A1 ist das Eisensulfat beschichtet zur Erhöhung der Oxidationsbeständigkeit.

Eisen(II)sulfat stammt ganz überwiegend aus dem Prozess der Titandioxidherstellung nach dem Sulfatverfahren, wo es als Nebenprodukt anfällt. Dabei kann Eisen (II) sulfat durch Kristallisation aus der schwefelsauren, titan- und eisenhaltigen Lösung erhalten werden, die beim Aufschluss der titan- und eisenhaltigen Erze oder synthetischen Rohstoffe erhalten wird (Schwarzlösung). Hierbei wird ein Teil, jedoch nicht das gesamte Eisen aus der Lösung entfernt. Die Kristallisation des Eisen(II)sulfats erfolgt dabei durch Abkühlung der heißen Lösung z.B. durch Vakuumkühlung und gegebenenfalls zusätzliche Eindampfung.

Nach Abtrennung des Eisen(II)sulfats wird die verbleibende Lösung hydrolysiert. Das hierbei erhaltene Titanoxidhydrat wird durch Filtration von der dabei zurückbleibenden sogenannten Dünnsäure abgetrennt. Während das Titanoxidhydrat weiter zu Titandioxid verarbeitet wird, muss die Dünnsäure einer weiteren Verwertung zugänglich gemacht oder in geeigneter Form zu unschädlichen Verbindungen umgesetzt werden.

Auch aus der Dünnsäure kann Eisen(II)sulfat-Heptahydrat durch Kristallisation in ähnlicher Weise erhalten werden, wie oben für die Gewinnung von Eisen (II) sulfat-Heptahydrat aus der sogenannten Schwarzlösung beschrieben. In EP 132820 wird die Möglichkeit beschrieben, aus der Dünnsäure vor der Aufkonzentrierung Eisen(II)sulfat-Heptahydrat abzutrennen. Als Nachteil dabei wird jedoch angeführt, dass bei einer solchen Abtrennung von Eisen(II)sulfat-Heptahydrat die übrigen Metallsulfate in der Dünnsäure verbleiben und dass für das Grünsalz keine ausreichenden Verwendungsmöglichkeiten existieren.

EP132820 schlägt daher vor, die Dünnsäure einzudampfen, gegebenenfalls Metallsulfate abzutrennen und die restlichen Metallsulfate mit CaO, Ca(OH)₂ und/oder CaCO₃ zu Gips und schwerlöslichen Metallverbindungen umzusetzen. Die so erhaltenen Feststoffe haben eine hellbraune Farbe, die von der Oxidation von Eisen(II)-hydroxid zu Eisen(III)-hydroxid herrührt. Es wird u.a. die Verwendung dieses Feststoffgemisches bei der Kalzinierung von Zement als eisenhaltiger Zusatz beschrieben.

EP 160 747 A1 beschreibt, dass die chromatreduzierende Wirkung von Eisen(II)-sulfat welches dem Zement zugemischt ist, während der Lagerung mit der Zeit abnimmt. Die Menge an zuzusetzendem Eisen(II)-sulfat muss folglich in Abhängigkeit der Lagerzeit bestimmt werden, um zu gewährleisten, dass das Chromat in der Zementzubereitung zu einem bestimmten Zeitpunkt vollständig reduziert wird.

Von der dänischen Zementindustrie wird daher die Einhaltung des Grenzwertes von 2 ppm von löslichem Chrom nur für 2 Monate garantiert. (vgl. Bericht des Verein deutscher Zementwerke e.V. (VDZ) Forschungsinstitut der Zementindustrie "Chromatarmer Zement für einen verbesserten Arbeitsschutz" vom 16.01.02). Der Arbeitskreis "Analytische Chemie" im VDZ nennt eine unproblematische Lagerzeit von 3 bis 6 Monaten. Die Langzeitstabilität ist dabei jedoch stark abhängig von den Lagerbedingungen des Zementes, z.B. Feuchtigkeit und Temperatur (vgl. Sachstandsbericht zur Bedeutung des Chromates in Zementen und zementhaltigen Zubereitungen vom 05.01.99; Verein deutscher Zementwerke e.V. Forschungsinstitut der Zementindustrie).

Der Erfindung liegt die Aufgabe zu Grunde, ein eisen(II)sulfathaltiges Reduktionsmittel für den löslichen Chromatgehalt in Zement sowie geeignete Herstellungsverfahren hierfür bereitzustellen.

Diese Aufgabe wird erfindungsgemäß gelöst durch ein Verfahren zur Herstellung eines eisen(II)sulfathaltigen Reduktionsmittels, umfassend die Aufkonzentrierung einer eisen(II)sulfathaltigen Gebrauchtschwefelsäure und die Abtrennung der Schwefelsäure von der erhaltenen eisen (II) sulfathaltigen Ausfällung. Auf diese Weise wird ein wirksames Reduktionsmittel für Chromat in Zement erhalten. Bevorzugt erfolgt nach der Abtrennung der Schwefelsäure von der erhaltenen eisen(II)sulfathaltigen Ausfällung eine anschließende Reduzierung der an der abgetrennten Ausfällung anhaftenden Schwefelsäuremenge durch eine weitere Abtrennung, Teilneutralisation oder Neutralisation dieser Schwefelsäure. Es wurde überraschend gefunden, dass insbesondere durch die Reduzierung der an der abgetrennten Ausfällung anhaftenden Schwefelsäuremenge durch eine weitere Abtrennung, Teilneutralisation oder Neutralisation ein geeignetes Reduktionsmittel für den löslichen Chromatgehalt in Zement erhalten werden kann, welches sowohl ohne weitere Zusätze als auch mit weiteren Zusätzen als Reduktionsmittel für Chromat in Zement eingesetzt werden kann.

Bei verschiedenen industriellen Verfahren fällt eine eisen(II)haltige Gebrauchtschwefelsäure an. So entsteht beispielsweise bei der Herstellung von Titandioxid nach dem Sulfatprozess als Nebenprodukt eine ca. 25 %-ige wässrige Schwefelsäure (Dünnsäure). Aus dieser'Dünnsäure können nach Aufkonzentrierung, Ausfällung von eisen (II) sulfathaltigen Salzgemischen und Abtrennung der Schwefelsäure von der erhaltenen Ausfällung die erfindungsgemäßen eisen (II) sulfathaltigen Reduktionsmittel gewonnen werden. Bevorzugt erfolgt dabei nach der Abtrennung der Schwefelsäure von der erhaltenen Ausfällung eine anschließende Reduzierung der an der abgetrennten Ausfällung anhaftenden Schwefelsäuremenge.

Es können neben der Dünnsäure aus der Titandioxidherstellung aber auch andere eisen(II)sulfathaltige Gebrauchtschwefelsäuren verwendet werden. Beispielsweise eignen sich hierfür eisen(II)sulfathaltige Gebrauchtschwefelsäuren aus der Metallbeize.

Es ist ebenfalls möglich, Mischungen von eisen (II) sulfathaltigen Gebrauchtschwefelsäuren zu verwenden. Es ist schließlich auch möglich, eisen (III) sulfathaltige Gebrauchtschwefelsäuren zu verwenden, sofern diese zuvor mit metallischem Eisen oder anderen Reduktionsmitteln reduziert wurden.

Die verwendeten Gebrauchtschwefelsäuren weisen vorzugsweise einen Gehalt an Titan von weniger als 1,5 Gew.-%, besonders bevorzugt weniger als 0,8 Gew.-%, auf.

Die eisen(II)haltige Gebrauchtschwefelsäure wird erfindungsgemäß auf einen Schwefelsäuregehalt von mehr als 50 %, vorzugsweise 60 bis 80 % aufkonzentriert, wobei die darin gelösten Salze - überwiegend Eisen(II)sulfat-monohydrat - als feinkristalliner Niederschlag weitgehend auskristallisieren. Die Aufkonzentrierung kann kontinuierlich oder diskontinuierlich in Eindampfanlagen durch Verdampfung oder Verdunstung des Wassers unter Normaldruck oder Vakuum erfolgen. Bevorzugt werden kontinuierlich betriebene Zwangsumlaufverdampferanlagen unter Vakuum eingesetzt. Die darauffolgende Kristallisation kann in Eindampfanlagen mit angeschlossener Salzreife (Abkühlung) erfolgen. Dabei können die vorhandenen Metallsulfate als Sulfate, Hydrogensulfate, Oxysulfate oder als komplexe Mischung hiervon auskristallisieren. Das Eisen kristallisiert dabei bevorzugt als Eisen(II)sulfat-Monohydrat. Nach Abtrennung der Ausfällung, z.B. durch Filtration, Sedimentation oder Zentrifugation, wird die verbleibende vorkonzentrierte Schwefelsäure entweder weiter aufkonzentriert und in den Prozess zurückgeführt oder anderweitig verwendet. Die abgetrennte Ausfällung (auch Filtersalz genannt, wenn die Gebrauchtschwefelsäure aus der Titandioxidherstellung erhalten wird) wird vorzugsweise in der Wärme (bei ca. 70°C) auf Filteraggregaten wie z.B. Kammerfilterpresse, Pressbandfilter, Drehfilter, Kerzen-Druckfilter abgetrennt. Besonders bevorzugt erfolgt die Abtrennung durch Filtration, z.B. mittels Kerzen-Druckfiltern oder Kammerfilterpressen.

Die abgetrennte Ausfällung (z. B. Filtersalz) enthält vorzugsweise zwischen 40 und 60 % Eisen(II)sulfat-monohydrat, zwischen 3 % und 10 % weitere Metallsulfate, zwischen 15 % und 30 % freie Schwefelsäure und etwa 10 % bis 13 % Wasser.

Nach dem Abtrennen wird die an der abgetrennten Ausfällung anhaftende Schwefelsäuremenge vorzugsweise weiter reduziert, z.B. durch Verdrängen der Schwefelsäure mit Druckluft oder Waschen mit Wasserdampf, durch Waschen mit einem Waschmedium, wie Dünnsäure, gesättigte FeSO₄-Lösurig, verdünnte FeSO₄-haltige wässrige Lösungen oder Wasser, durch Umsetzen mit Eisen oder einer basischen Eisen(II)verbindung und Wasser oder durch Zugabe von pulverförmigen alkalischen Verbindungen, insbesondere CaCO₃, CaO, Ca(OH)₂, MgO und/oder Mg(OH)₂ oder deren Anschlämmungen, wie Kalkmilch.

Die Wäsche der abgetrennten Ausfällung mit einem Waschmedium wird bevorzugt mit 40 bis 500 Gew.-% Waschmedium bezogen auf die abgetrennte Ausfällung (z. B. Filtersalz) durchgeführt.

Vorzugsweise wird die Wäsche bei einer Temperatur von 55 bis 100 °C durchgeführt. Besonders bevorzugt sind Temperaturen zwischen 55 und 75 °C.

Als ideales Waschmedium hat sich Dünnsäure erwiesen, insbesondere wenn die Wäsche bei erhöhter Temperatur durchgeführt wird. Bei einer Wäsche der abgetrennten Ausfällung mit Dünnsäure in diesem Temperaturbereich wird
- wenig Salz aus der abgetrennten Ausfällung gelöst, da Dünnsäure bereits die Salze in gelöster Form enthält und die Löslichkeit von Eisen(II)sulfat in diesem Medium einen negativen Temperaturkoeffizienten aufweist (d.h. mit steigender Temperatur nimmt die Löslichkeit ab)
- eine stabile rieselfähige Ausfällung erhalten, die keinerlei thixotrope Eigenschaften aufweist.

Eine Wäsche mit warmer Dünnsäure kann in denselben Filtrationsapparaten durchgeführt werden, ohne die Ausfällung (Filterkuchen) zwischenzeitlich ausräumen zu müssen. Der Ablauf der Filtration umfasst bevorzugt die folgenden Schritte in der angegebenen Reihenfolge: Beladen des Filtrierapparates, Abpressen, ggf. Durch- bzw. Ausblasen, Waschen mit Dünnsäure, Durch- bzw. Ausblasen und Abwerfen. Die abgetrennte Ausfällung kann auch in einer Vorlage in warmer Dünnsäure suspendiert werden und erneut abfiltriert werden.

Die Wäsche mit Dünnsäure ist insbesondere dann vorteilhaft, wenn die abgetrennte Ausfällung Filtersalz aus der Titandioxidproduktion ist, da
- keine zusätzliche Waschflüssigkeit erzeugt wird, die entweder das Recycling-System durch Erhöhung der zu verdampfenden Wassermenge belasten würde oder anderweitig entsorgt werden müsste;
- heiße Dünnsäure für die Wäsche von Filtersalz in ausreichender Menge im Prozess zur Verfügung steht
- die Wäsche in denselben Apparaten durchgeführt werden kann, in denen auch die Abtrennung.des Filtersalzes aus der vorkonzentrierten Schwefelsäure durchgeführt wird.
   Es sind also keine zusätzlichen Apparate erforderlich
- eine Kreuzkontamination von Waschmedium (Dünnsäure) und Mutterlauge (vorkonzentrierter Säure) der Filtersalzabtrennung verfahrenstechnisch unbedenklich ist
- die zur Eindampfung gelangende Dünnsäure durch die Wäsche aufgestärkt wird und somit bei der Dünnsäureaufarbeitung bei Verdampfung der gleichen Wassermenge mehr Säure aufkonzentriert wird und die entsprechende Menge an spezifisch benötigter Energie eingespart wird
- die bei der weiteren Aufarbeitung der abgetrennten Schwefelsäure verwendeten Anlagen (beispielsweise Filtersalzspaltanlagen, die Schwefelsäure-Kontaktanlagen und/oder Schwefeltrioxid-Absorptionsanlagen) um den aus dem Filtersalz ausgewaschenen Schwefelsäureanteil entlastet werden und somit eine höhere Menge an Filtersalz spalten können
- und die dem Filtersalz anhaftende Schwefelsäure dem Produktionskreislauf wieder zugeführt werden kann.

Als Waschmedien zur Reduzierung der an der abgetrennten Ausfällung anhaftenden Schwefelsäuremenge können neben Dünnsäure aber auch Wasser, eine gesättigte FeSO₄-Lösung oder verdünnte FeSO₄-haltige wässrige Lösungen verwendet werden.

Die Reduzierung der an der abgetrennten Ausfällung anhaftenden Schwefelsäuremenge nach Aufkonzentrierung der Gebrauchtschwefelsäure und Abtrennung der Ausfällung von der aufkonzentrierten Gebrauchtschwefelsäure kann erfindungsgemäß auch durch Waschen mit Wasserdampf, bevorzugt bei einer Temperatur oberhalb von 100°C, erfolgen. Dabei ist zu beachten, dass zusätzlich eingebrachte Flüssigkeit bzw. Kondensat später unter Aufwand von Energie destillativ wieder aus der anfallenden Säure entfernt werden muss.

Eine Wäsche mit Dampf bietet den Vorteil, dass nur sehr wenig Wasser in Form von Dampf verwendet wird, da zunächst eine Verdünnung der Säure durch den Wasserdampf erfolgt, der gleichzeitig die anhaftende Säure ausbläst. Bei den erfindungsgemäß angewandten erhöhten Temperaturen erfolgt nach der so durchgeführten Abtrennung der Schwefelsäure aus der abgetrennten Ausfällung keine weitere Kondensation von Wasserdampf. Man macht sich somit die hygroskopischen Eigenschaften der Schwefelsäure zu Nutze; es wird nämlich nur so lange Wasserdampf in der abgetrennten Ausfällung kondensiert als noch hoch konzentrierte Schwefelsäure vorhanden ist. Andererseits ist Eisen(II)sulfat-monohydrat in verdünnter Schwefelsäure bei erhöhter Temperatur nur schwer löslich und wird darüber hinaus in situ ausgeblasen, sodass sich kein Lösungsgleichgewicht einstellen kann. Daher wird durch die Wäsche mit Dampf nur ein geringer Anteil des in der abgetrennten Ausfällung enthaltenen Eisensulfats ausgewaschen.

Für die Wäsche der abgetrennten Ausfällung mit Dampf ergeben sich im allgemeinen folgende Vorteile:
- Es wird nur eine geringe Menge Wasser ins System eingebracht.
- Die ausgewaschene Schwefelsäure fällt in hoher Konzentration an.
- Es wird nur wenig Eisen(II)sulfat-monohydrat aus der abgetrennten Ausfällung gelöst wird, da Dampf nicht lösend wirkt.

Für die technische Anwendung ist die Wäsche mit Wasserdampf insbesondere dann vorteilhaft, wenn die abgetrennte Ausfällung Filtersalz aus der Titandioxidproduktion ist, da
- die zur Eindampfung gelangende Dünnsäure mit der Waschsäure aufgestärkt werden kann, somit bei der Dünnsäureaufarbeitung spezifisch weniger Wasser verdampft werden muss und die entsprechende Menge an Energie eingespart wird
- die Filtersalzspaltanlage, die Schwefelsäure-Kontaktanlage und die Schwefeltrioxid-Absorptionsanlage um den aus dem Filtersalz ausgewaschenen Anteil entlastet wird und somit für zusätzliche Produktionskapazität an Schwefelsäure zur Verfügung stehen.
- die im Filtersalz enthaltene Schwefelsäure zum großen Teil in das Kreislauf-System zurückgeführt wird

Für die Erzielung hoher Schwefelsäurekonzentrationen und niedriger Eisensulfatkonzentrationen im Kondensat der Wäsche sind hohe Dampftemperaturen von Vorteil, stellen aber höhere Materialanforderungen an die eingesetzten Apparate. Für die Erzielung niedriger Schwefelsäurekonzentrationen im verbleibenden Filtersalzkuchen sind niedrige Dampftemperaturen vorteilhaft.

Besonders bevorzugt wird die Wäsche mit Dampf bei einer Temperatur von 105 bis 130 °C durchgeführt.

Die Reduzierung der an der abgetrennten Ausfällung anhaftenden Schwefelsäuremenge nach Aufkonzentrierung der Gebrauchtschwefelsäure und Abtrennung der Ausfällung von der aufkonzentrierten Gebrauchtschwefelsäure kann erfindungsgemäß auch durch Umsetzung mit Wasser und metallischem Eisen oder einer basischen Eisen(II)verbindung oberhalb von 60 °C erfolgen.

Aufgrund der hohen Schwefelsäure-Konzentration in der abgetrennten Ausfällung und der in der Haftsäure gelösten Metallsulfate, die Schwefelsäure im Kristallgitter einbauen können, reagiert die abgetrennte Ausfällung nicht mit metallischem Eisen bzw. nur wenig mit basischen Eisen (II) verbindungen. Deshalb lässt sich der Schwefelsäureanteil in der Haftsäure technisch nur schwer durch direkte Umsetzung mit Eisen bzw. der basischen Eisen(II)verbindung teilneutralisieren oder neutralisieren. Bei Zugabe von Wasser wandelt sich Eisen (II) sulfat-monohydrat bei normaler Umgebungstemperatur in Eisen(II)sulfat-heptahydrat um. Um die Schwefelsäure so weit zu verdünnen, dass eine Reaktion mit Eisen bzw. der basischen Eisen(II)verbindung stattfindet, müsste also so viel Wasser zugesetzt werden, dass über die Bildung des Heptahydrates hinaus während der Umsetzung mit Eisen bzw. der basischen Eisen(II)verbindung stets eine wässrige Phase vorhanden ist. Wird die Reaktion in der Kälte durchgeführt, wäre im Anschluss das überschüssige Wasser in einem nachfolgenden Verfahrenschritt z.B. durch Trocknung zu entfernen.

Oberhalb von ca. 60 °C spaltet Eisen(II)sulfat-heptahydrat Wasser unter Bildung von Eisen(II)sulfat-monohydrat ab. Versetzt man die abgetrennte Ausfällung oberhalb dieser Temperatur mit wenig Wasser, bleibt das Monohydrat erhalten. Man erhält einen fließfähigen Brei, in dem Schwefelsäure so weit verdünnt ist, dass eine Reaktion mit Eisen bzw. der basischen Eisen(II)verbindung unter Bildung von zusätzlichem Eisen(II)sulfat-monohydrat möglich ist.

Bevorzugt wird die Umsetzung der abgetrennten Ausfällung mit metallischem Eisen.bzw. der basischen Eisen(II) verbindung bei einer Temperatur von 60 bis 110 °C, besonders bevorzugt bei einer Temperatur von 75 bis 85 °C, durchgeführt.

Beim Abkühlen der ausreagierten breiigen, aber pump- und rührfähigen Mischung wird verbliebenes Wasser unter Bildung von Eisen(II)sulfat-heptahydrat vollständig gebunden und ein trockener harter Feststoff gebildet.

Die Umsetzung der abgetrennten Ausfällung erfolgt bevorzugt mit 80 bis 98 mol-% metallischem Eisen bzw. basischer Eisen(II)verbindung, wie Eisen(II)carbonat oder Eisen(II)hydroxid oder Eisen(II)oxid bezogen auf die an der abgetrennten Ausfällung (z. B. Filtersalz) anhaftenden Schwefelsäuremenge, wobei soviel Wasser hinzugegeben wird, dass das Molverhältnis Wasser zu Eisensulfat 6,5 bis 7 beträgt.

Bei der Umsetzung der abgetrennten Ausfällung mit einer basischen Eisen(II)verbindung verwendet kann diese auch in Form eines natürlichen Erzes wie Siderit umgesetzt werden. Es können hierzu aber auch Eisen(II)verbindungen, die Bestandteil eines industriellen Abfallproduktes sind, verwendet werden.

Bei Verwendung von metallischem Eisen zur Umsetzung mit der abgetrennten Ausfällung wird bevorzugt metallisches Eisen einer mittleren Teilchengröße von 5 mm oder kleiner, besonders bevorzugt Eisen(pulver) einer mittleren Teilchengröße von 100 µm oder kleiner, verwendet.

Der Start der Reaktion kann durch eine Beheizung, z.B. mit (Direkt-)Dampf beschleunigt werden. Die Reaktion selbst ist exotherm. Bei Verwendung von grobem Eisen dauert die Reaktion länger. In diesem Fall müssen ggf. Wasserverluste infolge Verdampfung und Wärmeverluste durch Zufuhr von Dampf ausgeglichen werden. Die Reaktion mit Siderit verläuft langsamer und ohne auffällige Wärmetönung. Auch hier muss durch Zufuhr von Wärme z.B. durch Direktdampf der Wärme- und Wasserverlust ausgeglichen werden.

Die Regelung der Dampfzufuhr und / oder Wasserzufuhr kann anhand der Temperatur bzw. Viskosität (z.B. durch Messung der Stromaufnahme des Rührwerks) gesteuert werden. Je nach Korngröße des verwendeten Eisens bzw. des Siderits beträgt die Reaktionszeit wenige Minuten (Verwendung von Eisenpulver: 10 µm) bis zu einigen Stunden (Verwendung von Eisengranalien: 3mm oder Siderit Fraktion: < 1mm).

Die Reaktion wird in der Regel unter Normaldruck durchgeführt.

Technisch kann die Umsetzung der abgetrennten Ausfällung mit Wasser und metallischem Eisen oder einer basischen Eisen(II)verbindung und Wasser in einem Rührbehälter erfolgen, in den kontinuierlich oder diskontinuierlich die Komponenten abgetrennte Ausfällung, Eisen bzw. basische Eisen (II) verbindung und Wasser eingebracht werden. Es entsteht eine pastöse Masse die z.B. auf einer Kühlstrecke als Pellets zur Erstarrung gebracht werden kann. Eine andere Möglichkeit ist das Verblasen mit kalter Luft. Je nach Reaktivität des Neutralisationsmittels kann auch ein Kneter (Doppelpaddelschnecke oder ähnliches) für die Reaktion und die Erstarrung eingesetzt werden.

Erfolgt die.Umsetzung der abgetrennten Ausfällung mit metallischem Eisen oder einer basischen Eisen(II)verbindung kontinuierlich, so kann der nicht reagierte Anteil an Eisen bzw. basischer Eisenverbindung aus dem Überlauf abgeschieden und zurückgeführt wird. Wird hierbei metallisches Eisen zur Umsetzung verwendet, so kann die Abscheidung des Eisens durch einen Magnetabscheider erfolgen.

Die Reduzierung der an der abgetrennten Ausfällung anhaftenden Schwefelsäuremenge nach Aufkonzentrierung der Gebrauchtschwefelsäure und Abtrennung der Ausfällung von der aufkonzentrierten Gebrauchtschwefelsäure kann erfindungsgemäß auch durch Verdrängen der Schwefelsäure mit Druckluft erfolgen.

Ebenso kann zur Reduzierung der an der abgetrennten Ausfällung anhaftenden Schwefelsäuremenge nach Aufkonzentrierung der Gebrauchtschwefelsäure und Abtrennung der Ausfällung von der aufkonzentrierten Gebrauchtschwefelsäure erfindungsgemäß auch eine Teilneutralisation oder Neutralisation durch Zugabe von pulverförmigen alkalischen Verbindungen, insbesondere CaCO₃, CaO, Ca(OH)₂, MgO und/oder Mg(OH)₂ oder deren Anschlämmungen, wie Kalkmilch, erfolgen.

Die Zugabe dieser pulverförmigen alkalischen Verbindungen kann auch nach einem der oben beschriebenen Verfahrensschritte zur Reduzierung der an der abgetrennten Ausfällung anhaftenden Schwefelsäuremenge, wie Waschen mit einem Waschmedium, wie Dünnsäure, gesättigte FeSO₄-Lösung, verdünnte FeSO₄-.haltige wässrige Lösungen oder Wasser oder Verdrängen der Schwefelsäure mit Druckluft oder Waschen mit Wasserdampf oder Umsetzen mit Eisen oder einer basischen Eisen (II) verbindung und Wasser, zur Teilneutralisation oder Neutralisation der Restsäure in der abgetrennten Ausfällung erfolgen.

Nach der Reduzierung der an der abgetrennten Ausfällung anhaftenden Schwefelsäuremenge oder nach der Teilneutralisation oder Neutralisation der Restsäure in der abgetrennten Ausfällung durch Zugabe von pulverförmigen alkalischen Verbindungen wird vorzugsweise eine definierte Menge an Wasser, einer wässrigen Salzlösung oder einer verdünnten Schwefelsäure zugegeben, so dass eine Granulierung erfolgen'kann. Die Zugabe kann besonders vorteilhaft im Filteraggregat durch Verdrängungswäsche der Dünnsäure mit Wasser erfolgen, was dann zusätzlich die zurück gewonnene Säuremenge erhöht, ohne die zu verdampfende Wassermenge nennenswert zu erhöhen. Optional kann auch die benötigte Wassermenge durch die Zugabe von feuchtem Grünsalz erfolgen. Diese Variante bietet den Vorteil, dass dann die Trocknung des Grünsalzes ohne Energie- oder Chemikalienaufwand erfolgt und ein granuliertes oder pulverförmiges Produkt erhalten wird.

Die dabei zugegebene Wassermenge kann 100 bis 550 mol-% bezogen auf das in der abgetrennten Ausfällung enthaltene Eisen (II) sulfat-Monohydrat betragen. In einer besonders bevorzugten Ausführung beträgt die zugegebene Wassermenge 250 bis 350 mol-% bezogen auf das in der abgetrennten Ausfällung enthaltene Eisen(II)sulfat-Monohydrat.

Die Granulierung und die Steuerung der Granaliengröße erfolgt vorzugsweise durch mechanische Verformung oder durch Verblasen mit Luft oder durch Versprühen mit einer Düse oder einer Drehscheibe oder durch Abkühlen, z.B. durch eine Kühlwalze oder ein Kühlband oder durch Fallen oder Wirbeln in kalter Luft. Je nach eingestellten Prozessparametern erhält man dabei feste Blöcke, grobe oder feine Granalien oder pulverförmiges Schüttgut.

Das nach den obigen Verfahren großtechnisch besonders kostengünstig, energiesparend und in konstanter Qualität erhaltene eisen (II) sulfathaltigen Reduktionsmittel kann zur Reduktion von Chromat in Zement verwendet werden.

Das erfindungsgemäße eisen(II)sulfathaltige Reduktionsmittel weist eine mittlere Kristallitgröße von weniger als 2 µm, bevorzugt zwischen 0,1 und 1,0 µm auf. In einigen besonderen Ausführungsformen liegt die mittlere Kristallitgröße im Bereich von 0,2 und 0,5 µm.

Die mittlere Kristallitgröße wird wie folgt bestimmt: Die Proben werden unter Kapton-Folie (zum Ausschluss von Feuchtigkeit) an einem Philips PW 1800 Diffraktometer gemessen. Die Bestimmung der Kristallitgröße erfolgt mittels des Philips Fit-Programms aus dem 100% Reflex des gemessenen Spektrums.

Für das eisen(II)sulfathaltige Reduktionsmittel (Eisen(II)sufat-Monohydrat) wurde aus dem Messbereich 25°-28° 2theta der 100%-Reflex hkl 200 bei 25,879° 2theta zur Kristallitgrößenbestimmung verwendet.

Für das dem Stand der Technik entsprechende Reduktionsmittel, Grünsalz der Firma KRONOS (Eisen(II)sufat-Heptahydrat), wurde aus dem Messbereich 17,5°-18,75° 2theta der 100%-Reflex hkl 111 bei 18,088° 2theta zur Kristallitgrößenbestimmung verwendet.

Die Kristallitgröße ist dabei nicht identisch mit der Größe der Primärpartikel wie sie aus Elektronenmikroskopaufnahmen erkennbar ist. Jedoch zeigen sich auch in den Elektronenmikroskopaufnahmen deutliche Unterschiede: die mittlere Primärpartikelgröße für das erfindungsgemäße eisen(II)sulfathaltige Reduktionsmittel beträgt ca. 5 µm; für das dem Stand der Technik entsprechende Reduktionsmittel (Grünsalz der Firma KRONOS) beträgt die mittlere Primärpartikelgröße ca. 50 µm.

Die Kristallitgröße dieser eisen(II)sulfathaltigen Metallsulfate ist im Gegensatz zum herkömmlich erhaltenen Eisen (II) sulfat-Heptahydrat (Grünsalz) deutlich geringer (0,3 gegenüber von >>3 µm in herkömmlichem Grünsalz) und die Gehalte an Metallen außer Eisen höher als in Grünsalz.

Das erfindungsgemäße eisen(II)sulfathaltige Reduktionsmittel enthält vorzugsweise 5 bis 15 Gew.%, besonders bevorzugt 7 bis 13 Gew.% Titan, bezogen auf Eisen und / oder vorzugsweise 1,5 bis 4,0 Gew.%, besonders bevorzugt 2,0 bis 3,5 Gew.% Mangan, bezogen auf Eisen.

Ein Vorteil der erfindungsgemäßen Verfahren besteht darin, dass neben Eisensulfat alle aus der aufkonzentrierten Schwefelsäure auskristallisierenden Metallsulfate, z.B. Mangan(II)sulfat einer Verwertung zugeführt werden. Die in dem erfindungsgemäßen eisen (II) sulfathaltigen Reduktionsmittel in geringen Mengen enthaltenen weiteren Metallsulfate zeigen keine nachteiligen Auswirkungen und werden in der Zementmatrix nach dem Aushärten dauerhaft eingebunden. So kann beispielsweise durch das erfindungsgemäße eisen(II)sulfathaltige Reduktionsmittel trotz des zusätzlichen Einbringens von Chrom in den Zement der Gehalt an unerwünschtem löslichem Chrom wirksam und in ausreichendem Maße verringert werden.

Die Wirksamkeit des erfindungsgemäßen eisen(II)sulfathaltigen Reduktionsmittels ist bei Zusatz zu der Zement-Wasser-Mischung bei der Verarbeitung von Zement vergleichbar mit derjenigen von herkömmlich verwendetem Grünsalz (siehe Beispiel 2). Es werden 0,01 bis 5,0 Gew.-%, besonders bevorzugt 0,2 bis 1,5 Gew.-% des erfindungsgemäßen eisen(II)sulfathaltigen Reduktionsmittels eingesetzt. Die Zugabe des eisen(II)sulfathaltigen Reduktionsmittels kann dabei auch als Lösung oder Suspension erfolgen.

Bei Verwendung des erfindungsgemäßen eisen (II) sulfathaltigen Reduktionsmittels kann bei geringer Zugabemenge nach kurzer Lagerzeit zwar eine im Vergleich zum Stand der Technik geringere Wirkung festgestellt werden (s. Beispiel 3: Zusatz von 0,3 Gew.-% bzw. 0,6 Gew.-%). Überraschenderweise zeigt das erfindungsgemäße eisen(II)sulfathaltige Reduktionsmittel jedoch mit zunehmender Lagerungszeit nicht die allgemein bekannte immer weiter abnehmende Reduktionswirkung, sondern wieder eine zunehmende Reduktionswirkung. Im Vergleich zu den Reduktionsmitteln des Standes der Technik zeigt das erfindungsgemäße Reduktionsmittel somit keine signifikante Abnahme der Reduktionswirkung mit zunehmender Lagerzeit, insbesondere nicht nach einem Monat.

Auch Mischungen des eisen(II)sulfathaltigen Reduktionsmittels mit anderen Reduktionsmitteln, beispielsweise mit konventionellem Grünsalz, können vorteilhaft sein. Besonders günstig kann eine Mischung mit feuchtem Grünsalz sein.

Es ist weiterhin möglich, das eisen (II) sulfathaltige Reduktionsmittel oder eine Mischung des eisen(II)sulfathaltigen Reduktionsmittels mit Grünsalz mit weiteren inerten anorganischen und/oder organischen Verbindungen zu mischen, um gezielt günstige Förder- und/oder Lagereigenschaften einzustellen. '

Das erfindungsgemäße eisen(II)sulfathaltige Reduktionsmittel kann entweder
- dem gemahlenen Zement bei der Abfüllung in Silos oder Säcke,
- dem gemahlenen Zement unmittelbar nach der Mahlung und vor der Zuführung zum Silo,
- unmittelbar vor der Verladung in Silo-Lkw zugemischt werden oder erst unmittelbar vor, während oder nach dem Anmachen des Zements mit Wasser zugegeben werden.

Die Erfindung stellt auch eine Zubereitung umfassend eine Mischung aus Zement und das erfindungsgemäße Reduktionsmittel bereit, wobei die Zubereitung 0,01 bis 5,0 Gew.-%, besonders bevorzugt 0,2 bis 1,5 Gew.-%, des eisen (II) sulfathaltigen Reduktionsmittels enthält.

Eine weitere erfindungsgemäße Zubereitung enthält Zement, Wasser und das erfindungsgemäße eisen(II)sulfathaltigen Reduktionsmittels, wobei die Zubereitung bezogen auf Zement 0,01 bis 5,0 Gew.-%, bevorzugt 0,2 bis 1,5 Gew.-%, des eisen(II)sulfathaltigen Reduktionsmittels enthält.

### Beispiele

### Beispiel 1

Herstellung und Charakterisierung des eisen(II)sulfathaltigen Reduktionsmittels

Die bei der Herstellung von Titandioxid nach dem Sulfatverfahren anfallende Dünnsäure mit einem Gehalt an Schwefelsäure von 23,5% und Eisen von 3,8% wurde in einer dreistufigen Zwangsumlaufverdampferanlage mit abgestuft verstärktem Vakuum bis auf einen Schwefelsäuregehalt von 48% (entspricht einer Schwefelsäurekonzentration in der Flüssigphase von 70%) eingedampft. Während des Eindampfens kristallisiert ein Grossteil des Eisensulfates als Monohydrat aus. Im Anschluss an die Eindampfung wurde die erhaltene Slurry einer Reife unterzogen, bei der in einer Rührkaskade ihre Temperatur von ca. 90°C auf 60°C abgesenkt wurde.
Danach wurde die Slurry in einer Kerzenfilteranlage unter Druck filtriert und der Filterkuchen mit Druckluft von anhaftender Schwefelsäure teilweise befreit. Man erhält einen krümeligen, trockenen gut handhabbaren Filterkuchen (Filtersalz), der als eisen(II)sulfathaltiges Reduktionsmittel verwendet werden kann.

Die Bestimmung der Kristallitgröße erfolgte röntgenographisch. Die Kristallitgröße von herkömmlichem Grünsalz (KRONOS) beträgt >>3 µm (die Bestimmung der Kristallitgröße für Grünsalz ist mit dieser Technik nicht eindeutig zu ermitteln; sie liegt jedoch auf jeden Fall weit höher als 3 µm).

**Tabelle 1**

| | eisen (II) sulfathaltig es Reduktionsmittel (ungewaschen) / % |
|---|---|
| Fe(II) | 15,05 |
| Fe (gesamt) | 15,5 |
| A1 | 0,28 |
| Ca | 0,056 |
| Cr | 0,048 |
| Mg | 1,5 |
| Mn | 0,37 |
| Na | 0,22 |
| Nb | < 0,005 |
| Ti | 1,4 |
| V | 0, 13 |
| freie H₂SO₄ | 24,75 |
| Kristallit-größe | 0,33 µm |

### Beispiel 2 a)

Jeweils 200 g Filtersalz mit einem Gehalt von 25,3 % an freier Schwefelsäure wurden bei 60 °C mit heißer Dünnsäure auf einer vorgewärmten Nutsche angemaischt und die heiße Suspension scharf abgesaugt. Im Gegensatz zur Wäsche mit kalter verdünnter Schwefelsäure wurde in allen Fällen ein nicht thixotropes rieselfähiges Filtersalz erhalten.

**Tabelle 2**

| Versuchsnummer | Zugegebene Menge an Dünnsäure [g] | H₂SO₄ im Filterkuchen [%] | Thixotropie |
|---|---|---|---|
| Filtersalz vor Wäsche | - | 25,3 | Nein |
| 1 | 100 | 20,7 | Nein |
| 2 | 200 | 12,9 | Nein |
| 3 | 300 | 11,3 | Nein |

### Beispiel 2 b)

Die Wäsche wurde wie in Beispiel 2 a), Versuch 3 durchgeführt. Anschließend erfolgte die Neutralisation der Restsäure im Filtersalz durch Untermischen von 10 Gew.-% CaCO₃.

### Beispiel 3 a)

Die bei der Herstellung von Titandioxid nach dem Sulfatverfahren anfallende Dünnsäure mit einem Gehalt an Schwefelsäure von 23,5% und Eisen von 3,8% wurde in einer dreistufigen Zwangsumlaufverdampferanlage mit abgestuft verstärktem Vakuum bis auf einen Schwefelsäuregehalt von 48% (entspricht einer Schwefelsäurekonzentration in der Flüssigphase von 70%) eingedampft. Während des Eindampfens kristallisiert ein Grossteil des Eisensulfates als Monohydrat aus. Im Anschluss an die Eindampfung wurde die erhaltene Slurry einer Reife unterzogen, bei der in einer Rührkaskade ihre Temperatur von ca. 90°C auf 60°C abgesenkt wurde.
Nach Filtration der Slurry über eine Filterpresse werden 2 kg Filtersalz erhalten mit einem Gehalt von 23 % an freier Schwefelsäure. Nach dem Filtrationsvorgang wird direkt, ohne die Presse zu entleeren mit dem dreifachen Kammervolumen der Presse mit 60 °C heißem Wasser gewaschen und nochmals abgepresst und trockengeblasen. Es wird ein rieselfähiges eisen(II)sulfathaltiges Reduktionsmittel mit einem pH-Wert von 1,8 erhalten.

Durch Zugabe von 6 Gew.-% pulverförmigem Ca(OH)₂ wird ein Material mit einem pH-Wert von 2,2 erhalten.
Das erhaltene eisen (II) sulfathaltige Reduktionsmittel weist gute rheologische Eigenschaften auf und ist aufgrund seines pH-Wertes von > 2 kein Gefahrgut.

Die Bestimmung des pH-Wertes erfolgt im Eluat von 10 g Salz in 1000 g H₂O mittels einer pH-Einstab-Meßkette mit Ag/AgCl-Referenzsystem der Fa. Schott, Typ H6580 an einem pH-Meter der Fa. Knick, Typ 765 Calimatic.

### Beispiel 3 b)

Das wie in Beispiel 3 a) nach Filtration der Slurry über eine Filterpresse erhaltene Filtersalz mit einem Gehalt von 23 % an.freier Schwefelsäure wurde ohne die Filterpresse zu entleeren direkt anschließend mit Pressluft trockengeblasen, abgepresst und nochmals trocken geblasen.

Es wird ein rieselfähiges eisen (II) sulfathaltiges Reduktionsmittel mit einem pH-Wert von 1,5 erhalten.
Durch Zugabe von 15 Gew.-% pulverförmigem Ca(OH)₂ wird ein Material mit einem pH-Wert von 2,6 erhalten.
Das erhaltene eisen(II)sulfathaltige Reduktionsmittel weist gute rheologische Eigenschaften auf und ist aufgrund seines pH-Wertes von > 2 kein Gefahrgut.'
Die Bestimmung des pH-Wertes erfolgt analog zu Beispiel 3 a).

### Beispiel 4

Die Wäsche wurde wie in Beispiel 2 durchgeführt. Ein Teil des nach Beispiel 2, Versuch 3 erhaltenen gewaschenen Filtersalzes wurden mit zwei Teilen Eisen(II)sulfat-heptahydrat vermischt und über mehrere Stunden in Bewegung gehalten. Man erhält ein Pulver, das keine thixotropen Eigenschaften aufweist. Alternativ kann eine Mischung im oben beschriebenen Verhältnis bei 80°C durchgeführt werden. Man erhält eine viskose Schmelze, die bei Abkühlung zu einem harten Kuchen erstarrt.

### Beispiel 5

500 g Filtersalz mit einem Gehalt von 25,3 % an freier Schwefelsäure wurden in einer mit Dampf beheizbaren Druckfilternutsche vorgeheizt und überhitzter Dampf bei geringem Überdruck durch den Filterkuchen geleitet, bis die Menge an schwefelsaurem Kondensat deutlich geringer wurde.

**Tabelle 3**

| Versuchstemperatur (°C) (Filtersalz- und Dampf) | H₂SO₄ im Filterkuchen (% w/w) | H₂SO₄ im Kondensat der Dampfwäsche (% w/w) | FeSO₄ im Kondensat der Dampfwäsche (% w/w) |
|---|---|---|---|
| Filtersalz vor Wäsche | 25,3 | - | - |
| 105 | 2,2 | 24,8 | 12,1 |
| 110 | 3,5 | 34,1 | 7,2 |
| 120 | 4,6 | 47,6 | 4,1 |

### Beispiel 6

Die Wäsche wurde bei 120°C wie in Beispiel 5 durchgeführt. Anschließend erfolgte die Neutralisation der Restsäure im Filterkuchen durch Zugabe von 5 Gew.-% CaCO₃.

### Beispiel 7

Jeweils 30 g Filtersalz mit einem Eisengehalt von 16,2 % und einem Gehalt an freier Schwefelsäure von 20,3 % wurden bei Temperaturen oberhalb 60 °C mit je 7,5 g Wasser angeteigt und unterschiedlichen Mengen metallischem Eisen umgesetzt. Dabei wurde sowohl Eisenpulver mit einer mittleren Teilchengröße von 10 µm als auch Eisengranalien mit einer Korngröße von 1-2 mm eingesetzt. Mit zunehmender Korngröße verlängerte sich die erforderliche Zeit bis zur vollständigen Auflösung des Eisens.

Eine Übersicht gibt Tabelle 4.

**Tabelle 4**

| Filtersalz (g) | Fe (met) (g) | Wasser (g) | Reaktions Zeit (min) | Reaktions Temp (°C) | Produkt (g) | % Fe im Prod. | | % H₂SO₄ | |
|---|---|---|---|---|---|---|---|---|---|
| | | | | | | Analyse | Theor. | Analyse | Theor. |
| Rohstoff | | | | | | 16,20 | | 20,30 | |
| 30 | 3 (*1 | 7,5 | 15 | 70 (*3 | 38,9 | 20,24 | 20,21 | 2,33 | 2,11 |
| 30 | 3 (*1 | 7,5 | 15 | 80 | 38,6 | 20,39 | 20,36 | 2,18 | 2,13 |
| 30 | 2,5 (*1 | 7,5 | 15 | 80 | 39,5 | 19,05 | 18,63 | 4,09 | 4,30 |
| 30 | 2 (*1 | 7,5 | 15 | 80 | 38,8 | 17,65 | 17,68 | 6,43 | 6,64 |
| 30 | 3 (*2 | 7,5 | 360 | 80 | 38,5 | n.b. | 20,58 | n.b. | 2,15 |

| | | | | | | | | | |
|---|---|---|---|---|---|---|---|---|---|
| *1 Eisenpulver, reinst. (Teilchengröße: 10µm, Fa. Merck) *2 Eisengranalien, techn. (Teilchengröße: ca. 1 - 2 mm) *3 nach 15 min waren noch geringe Mengen Eisenpulver erkennbar | | | | | | | | | |

### Beispiel 8

Die Reaktion wurde wie in Beispiel 7 durchgeführt. Ein Produkt mit einem Restsäure-Gehalt von 4,09% wurde pulverisiert und die Restsäure im Filtersalz durch Zugabe von 5 Gew.-% CaCO₃ neutralisiert. Der wässrige Auszug des so erhaltenen Pulvers zeigt keine sauren Eigenschaften.

### Beispiel 9

Zusatz des nach Beispiel 1 hergestellten eisen(II)sulfathaltigen Reduktionsmittels zu Zement beim Mischen mit Wasser

Die Mischen des Zements mit Wasser erfolgte nach der in TRGS 613 beschriebenen Methode zur Probenvorbereitung. Nach dem Mischen von Wasser und Zement wurde das eisen(II)-sulfathaltige Reduktionsmittel zugegeben und dann 15 Minuten gerührt.

Zur Bestimmung des löslichen Chroms wurde in Abweichung zu TRGS 613 die fünffache Menge (aber gleiches Verhältnis Zement - Wasser) eluiert und das gelöste Chrom mittels ICP-OES bestimmt.

Es zeigt sich, dass bei einer Zugabemenge des eisen(II)sulfathaltigen Reduktionsmittels von 0,10 Gew.-% oder mehr der Gehalt an löslichem Chrom unter der Nachweisgrenze liegt.

**Tabelle 5**

| **Zusatz Reduktionsmittel / Gew.-%** | **FeSO₄ / Gew.-% (berechnet)** | **Cr im Eluat / mg/l** | **Cr löslich / ppm** |
|---|---|---|---|
| 0 | 0 | 1,5 | 6 |
| 0,05 | 0,021 | 0,69 | 2,76 |
| 0,10 | 0,042 | <0,1 | <0,4 |
| 0,30 | 0,126 | <0,1 | <0,4 |
| 0,50 | 0,210 | <0,1 | <0,4 |
| 1,00 | 0,420 | <0,1 | <0,4 |

Zum Vergleich wurde der Versuch mit herkömmlichem Grünsalz (= Eisen(II)sulfat-Heptahydrat der Firma KRONOS) durchgeführt:

**Tabelle 6**

| **Zusatz Grünsalz / Gew.-%** | **FeSO₄ / Gew.-% (berechnet)** | **Cr im Eluat / mg/l** | **Cr löslich / ppm** |
|---|---|---|---|
| 0 | 0 | 1,5 | 6 |
| 0,05 | 0,022 | 0,19 | 0,76 |
| 0,10 | 0,043 | 0,1 | 0,4 |
| 0,30 | 0,130 | <0,1 | <0,4 |
| 0,50 | 0,217 | <0,1 | <0,4 |
| 1,00 | 0,434 | <0,1 | <0,4 |

Es zeigt sich, dass bei einer Zugabemenge an herkömmlichem Grünsalz von 0,10 Gew.-% oder mehr der Gehalt an löslichem Chrom an oder unter der Nachweisgrenze liegt.

### Beispiel 10

Zusatz des nach Beispiel 1 hergestellten eisen(II)sulfathaltigen Reduktionsmittels zu Zement beim Mischen mit Wasser

Es wurden verschiedene Mengen (s. Tabelle 7) an eisen(II)sulfathaltigem Reduktionsmittel als Zusatz zu gemahlenem Zement gegeben und 1 Stunde im Taumelmischer gemischt. Anschließend wurden die mit dem eisen(II)sulfathaltigen Reduktionsmittel versetzten Zementproben über unterschiedlich lange Zeiträume bei Raumtemperatur in luftdicht verschlossenen Gefäßen gelagert. Der Test auf reduzierende Wirkung erfolgte nach,TRGS 613 durch Mischen des Zements mit Wasser. Jedoch wurde in Abweichung zu TRGS 613 die fünffache Menge (aber gleiches Verhältnis Zement - Wasser) eluiert und das gelöste Chrom mittels ICP-OES bestimmt.

**Tabelle 7**

| **Reduktionsmittel** | **Menge** | **FeSO₄** | **Cr im Eluat / mg/l** | | | |
|---|---|---|---|---|---|---|
| | / Gew.-% | /Gew.-% (berechnet) | 1 Tag Lagerzeit | 1 Woche Lagerzeit | 2 Wochen Lagerzeit | 4 Wochen Lagerzeit |
| Kein Zusatz | 0 | 0 | 1,5^{a)} | 1,5^{a)} | 1,5^{a)} | 1,5^{a)} |
| eisen(II)sulfat-haltiges Reduktionsmittel | 0,30 | 0,126 | 0,64 | 1,64 | 0,66 | 0,62 |
| eisen(II)sulfat-haltiges Reduktionsmittel | 0,60 | 0,252 | 0,28 | 0,23 | 0,2 | <0,1 |
| eisen(II)sulfat-haltiges Reduktionsmittel | 0,90 | 0,378 | <0,1 | <0,1 | <0,1 | <0,1 |
| eisen(II)sulfat-haltiges Reduktionsmittel | 1,50 | 0,630 | <0,1 | <0,1 | <0,1 | <0,1 |
| Zum Vergleich: Grünsalz (KRONOS) | 0,30 | 0,130 | <0,1 | <0,1 | <0,1 | <0,1 |

| | | | | | | |
|---|---|---|---|---|---|---|
| ^{a)} Wert ist nicht zeitabhängig | | | | | | |

Der Grenzwert von 0,5 mg/l Chrom im Eluat wird bei Zusatz von 0,30 Gew.-% an herkömmlichem Grünsalz (KRONOS) sowie bei Zusatz von 0,60 Gew.-% oder mehr des eisen(II)sulfathaltigen Reduktionsmittels unterschritten.
Daneben zeigt sich, dass bei Zusatz von 0,60 Gew.-% des eisen(II)sulfathaltigen Reduktionsmittels nach einer Lagerungsdauer von 4 Wochen der Gehalt an löslichem Chrom unter der Nachweisgrenze liegt, obwohl zwischenzeitlich höhere Gehalte ermittelt wurden.

### Beispiel 11

Eine Probe des nach Beispiel 1 hergestellten eisen (II) sulfathaltigen Reduktionsmittels (Filtersalz) wurde mit 10 Gew.-% CaCO₃ versetzt.

Bestimmung der Wirksamkeit in Bezug auf die Chromatreduktion in Zement:

Zur Bestimmung der Wirksamkeit des so gewonnenen eisen(II)sulfathaltigen Reduktionsmittels wurden einem Prüfzement mit einem Gehalt an wasserlöslichem Chromat von 14,31 µg Cr(VI)/g Zement [= 14,31 ppm Cr(VI)] zunächst 0,3, 0,5, 0,7 und 1,0 M.-% des eisen (II) sulfathaltigen Reduktionsmittels zugesetzt. Sein Chromatgehalt wurde anschließend nach der Analysevorschrift im Anhang der TRGS 613 bestimmt. Der Reduktionserfolg war bei einer Dosierung von 0,3 % eisen(II)sulfathaltigen Reduktionsmittels (mittlere Zugabemenge für die Zugabe von Fe(II)-sulfat-Präparaten bei deutschen Zementen) nur gering. Erst bei einer Dosierung von 0,7 % lag der Gehalt wasserlöslichen Chromats unterhalb des in der TRGS 613 genannten Grenzwertes von 2 ppm. Bei einer Dosierung von 1,0 % eisen (II) sulfathaltigen Reduktionsmittel zum Prüfzement lag der Gehalt wasserlöslichen Chromats unterhalb der Bestimmungsgrenze.

Bestimmung der Zementnormdruckfestigkeit nach DIN EN 196-1:

Die Bestimmung der Zementnormdruckfestigkeit erfolgte an 4cmX4cmX16cm-Normmörtelprismen nach DIN EN 196-1 im Alter von 1, 2, 7 und 28 Tagen (jeweils sechs Messwerte je Prüfalter). Der oben beschriebene Prüfzement wurde dazu mit 1,0 % des eisen (II) sulfathaltigen Reduktionsmittels versetzt. Der Prüfzement ohne Eisen (II) sulfathaltigen Reduktionsmittel diente dabei als Referenz. Die Ergebnisse der Normdruckfestigkeitsprüfung stimmen für die beiden Zemente (mit und ohne Eisen (II) sulfathaltigen Reduktionsinittel) sehr gut überein.

Bestimmung Erstarrungszeiten nach DIN EN 196-3:

Zur Bestimmung des Erstarrungsbeginns wurde wiederum der in oben beschriebene Prüfzement mit und ohne eisen(II)sulfathaltiges Reduktionsmittel verwendet. Durch die Zugabe von 1,0 % eisen(II)sulfathaltigen Reduktionsmittel verringern sich die Zeiten für den Erstarrungsbeginn und das Erstarrungsende jeweils etwa um ein Drittel. Ursache dafür ist die signifikante Erhöhung des Sulfatgehaltes im bereits Sulfatträger-optimierten Zement.

Bestimmung des Wasseranspruch nach DIN EN 196-3:

Die oben beschriebenen Zemente mit und ohne eisen (II) sulfathaltiges Reduktionsmittel weisen den gleichen Wasseranspruch zur Erzielung der Mörtelnormsteife nach DIN EN 196-3 auf.

Die technisch relevanten Eigenschaften Normdruckfestigkeit und Wasseranspruch des eingesetzten Prüfzements werden auch bei sehr hohen, für eine ausreichende Chromatreduktion erforderliche Dosierung des eisen (II) sulfathaltigen Reduktionsmittels von 1,0 % nicht beeinflusst. Die Erstarrungszeiten des Prüfzements werden allerdings durch das eisen(II)sulfathaltige Reduktionsmittel jeweils um ein Drittel verringert. Dieses schnellere Erstarren ist auf den erhöhten Eintrag von Sulfat durch die hohe Dosierung des eisen (II) sulfathaltigen Reduktionsmittels zurückzuführen.

### Beispiel 12

Wie in Beispiel 11 wurde Filtersalz mit 10 Gew.-% CaCO₃ versetzt. Das teilneutralisierte Filtersalz wurde mit Grünsalz im Verhältnis 1:1 bzw. 2:1 gemischt und 0,5 bzw. 0,7% dieser Mischungen werden einem Prüfzement, wie in Beispiel 11 beschrieben, zugegeben.
Die erhaltene Mischung zeigt gute rheologische Eigenschaften. Bei beiden Dosierungen (0,5% und 0,7 %) lag der Gehalt wasserlöslichen Chromats unterhalb des in der TRGS 613 genannten Grenzwertes von 2 ppm.

## Patentansprüche

1. Eisen(II)sulfathaltiges Reduktionsmittel, umfassend eine eisen(II)sulfathaltige Ausfällung, wobei die eisen(II)sulfathaltige Ausfällung Eisen(II)sulfat-Monohydrat enthält und erhältlich ist durch ein Verfahren, umfassend die Aufkonzentrierung einer eisen(II)sulfathaltigen Gebrauchtschwefelsäure mit einem Gehalt an Titan von weniger als 1,5 Gew.% und die Abtrennung der Schwefelsäure vor der erhaltenen Ausfällung.

2. Eisen(II)sulfathaltiges Reduktionsmittel nach Anspruch 1, **dadurch gekennzeichnet, dass** die eisen(II)sulfathaltige Gebrauchtschwefelsäure einen Gehalt an Titan von weniger als 0,8 Gew.% aufweist.

3. Eisen(II)sulfathaltiges Reduktionsmittel nach Anspruch 1 oder 2, **dadurch gekennzeichnet, dass** die eisen (II) sulfathaltige Gebrauchtschwefelsäure aus einem Metallbeizprozess erhalten wird.

4. Eisen(II)sulfathaltiges Reduktionsmittel nach einem oder mehreren der vorhergehenden Ansprüche, wobei das eisen(II)sulfathaltige Reduktionsmittel weiterhin Grünsalz umfasst.

5. Eisen (II) sulfathaltiges Reduktionsmittel nach Anspruch 4, wobei die eisen (II) sulfathaltige Ausfällung und Grünsalz in einem Verhältnis von 1:1 bis 2:1 vorliegt.

6. Eisen(II)sulfathaltiges Reduktionsmittel nach einem oder mehreren der vorhergehenden Ansprüche, **dadurch gekennzeichnet, dass** die eisen (II) sulfathaltige Ausfällung eine mittlere Kristallitgröße von weniger als 2 µm, bevorzugt zwischen 0,1 und 1,0 µm, besonders bevorzugt zwischen 0,2 und 0,5 µm, aufweist.

7. Eisen (II) sulfathaltiges Reduktionsmittel nach einem der vorhergehenden Ansprüche, **dadurch gekennzeichnet, dass** bei der Herstellung der eisen(II)sulfathaltigen Ausfällung nach der Abtrennung der Schwefelsäure eine Reduzierung der an der abgetrennten Ausfällung anhaftenden Schwefelsäuremenge durch eine weitere Abtrennung, Teilneutralisation oder Neutralisation erfolgt.

8. Eisen(II)sulfathaltiges Reduktionsmittel nach Anspruch 9, **dadurch gekennzeichnet, dass** die Reduzierung der an der abgetrennten Ausfällung anhaftenden Schwefelsäuremenge durch eine Teilneutralisation oder Neutralisation durch Zugabe von pulverförmigen alkalischen Verbindungen, insbesondere CaCO₃, CaO, Ca(OH)₂, MgO und/oder Mg(OH)₂ oder deren Anschlämmungen, wie Kalkmilch, erfolgt.

9. Verwendung eines eisen (II) sulfathaltigen Reduktionsmittels nach einem der Ansprüche 1 bis 8 zur Reduktion des löslichen Chromatgehaltes in Zement.

10. Verwendung nach Anspruch 9, **dadurch gekennzeichnet, dass** dem Zement 0,01 bis 5,0 Gew.-%, bevorzugt 0,2 bis 1,5 Gew.-%, der eisen(II)sulfathaltigen Ausfällung zugegeben werden.

11. Verwendung nach einem der Ansprüche 9 oder 10, **dadurch gekennzeichnet, dass** das eisen(II)sulfathaltige Reduktionsmittel dem pulverförmigen Zement nach dem Mahlen und vor oder beim Abfüllen in Verpackungen oder Schüttgutbehälter oder Transportbehälter zugegeben wird.

12. Verwendung nach einem der Ansprüche 9 bis 11, **dadurch gekennzeichnet, dass** das eisen (II) sulfathaltige Reduktionsmittel dem Zement erst bei der Verwendung zugesetzt wird, indem das eisen(II)sulfathaltige Reduktionsmittel dem Zement während des Mischens mit Wasser oder unmittelbar davor oder unmittelbar danach zugemischt wird.

13. Verwendung nach Anspruch 12, **dadurch gekennzeichnet, dass** das eisen(II)sulfathaltige Reduktionsmittel in Form einer Suspension oder Lösung zugemischt wird.

14. Zubereitung aus Zement und wasserlöslichen Metallsulfaten, **dadurch gekennzeichnet, dass** die Zubereitung 0,01 bis 5,0 Gew.-%, bevorzugt 0,2 bis 1,5 Gew.-%, des gemäß einem oder mehreren der Ansprüche 1 bis 8 definierten eisen(II)sulfathaltigen Reduktionsmittels enthält.

15. Zubereitung aus Zement, Wasser und wasserlöslichen Metallsulfaten, **dadurch gekennzeichnet, dass** die Zubereitung bezogen auf Zement 0,01 bis 5,0 Gew.-%, bevorzugt 0,2 bis 1,5 Gew.-%,des gemäß einem oder mehreren der Ansprüche 1 bis 8 definierten eisen(II)sulfathaltigen Reduktionsmittels enthält.

16. Zubereitung nach Anspruch 14 oder 15, **dadurch gekennzeichnet, dass** die Zubereitung mindestens ein weiteres Reduktionsmittel, bevorzugt Grünsalz, enthält.
